(19)

Europäisches
Patentamt
European
Patent Office
Office européen
des brevets

(11) **EP 2 600 625 A1**

(12) **EUROPEAN PATENT APPLICATION**

(43) Date of publication:
**05.06.2013 Bulletin 2013/23**

(51) Int Cl.:
*H04N 13/04* (2006.01)    *H04N 13/00* (2006.01)

(21) Application number: **12179970.4**

(22) Date of filing: **09.08.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **30.11.2011 JP 2011262051**

(71) Applicant: **Kabushiki Kaisha Toshiba
Tokyo 105-8001 (JP)**

(72) Inventors:
• **Kaneko, Yuki
Tokyo, 105-8001 (JP)**
• **Karasawa, Mikiko
Tokyo, 105-8001 (JP)**

(74) Representative: **Henkel, Breuer & Partner
Patentanwälte
Maximiliansplatz 21
80333 München (DE)**

(54) **Image reproducer, image reproduction method, and data structure**

(57)     According to one embodiment, an image reproducer includes: a viewpoint position acquisition module (132) configured to acquire a viewpoint of a viewer (H) with respect to a display surface (301, 302) of a display (300); an image data acquisition module (131) configured to acquire image data (D3) including an image to be displayed and disposition information (D21) indicating a three-dimensional position of the image with respect to the viewer when the image is displayed to the viewer; a pixel value calculator (133) configured to calculate a pixel value on the display surface corresponding to a pixel of the acquired image such that the acquired image is displayed at the acquired position based on the acquired viewpoint of the viewer and the acquired position; and a display controller (14) configured to control the display (300) to display the acquired image based on the calculated pixel value.

FIG.3

**Description**

FIELD

Embodiments described herein relate generally to an image reproducer, an image reproduction method, and a data structure.

BACKGROUND

There have been display apparatuses that acquire viewpoints of viewers with respect to displays, obtain predetermined pixel data corresponding to light beams traveling from a subject along lines connecting the viewpoints and the displays, and display actual images corresponding to the viewpoints on the displays having surfaces of predetermined shapes. One example of the display apparatuses is disclosed in Japanese Patent Application Laid-open No. 2005-070963.

With such a conventional technique, however, a provider of an image cannot cause a viewer to view the image disposed at the provider's desired three-dimensional position because the actual image corresponding to the viewpoint is displayed.

One of the aims of the embodiments is to provide an image reproducer that enables a provider of an image to cause a viewer to view an image disposed at the provider's desired three-dimensional position, an image reproduction method performed by the image reproducer, and a data structure of image data of the image.

BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.
FIG. 1 is an exemplary block diagram illustrating a structure of an image reproducer according to an embodiment together with a recording medium, a network storage, a display, and a voice output device;
FIG. 2 is an exemplary schematic diagram illustrating a data structure of image data in the embodiment;
FIG. 3 is an exemplary block diagram illustrating a functional structure of the image reproducer in the embodiment;
FIG. 4 is an exemplary conceptual view illustrating a state in which a pixel value of a display pixel is calculated;
FIG. 5 is an exemplary flowchart illustrating operation of the image reproducer in the embodiment; and
FIG. 6 is an exemplary conceptual view illustrating how a viewer views a display image.

SUMMARY

To overcome the problems and achieve the object mentioned above, according to an embodiment, an image reproducer comprises: a viewpoint position acquisition module configured to acquire a viewpoint of a viewer with respect to a display surface of a display; an image data acquisition module configured to acquire image data comprising an image and disposition information indicating a three-dimensional position of the image with respect to the viewer when the image is displayed to the viewer; a pixel value calculator configured to calculate a pixel value on the display surface corresponding to a pixel of the image based on the viewpoint and the three-dimensional position; and a display controller configured to control the display to display the image based on the pixel value.

According to another embodiment of the invention, an image reproduction method comprises: acquiring a viewpoint of a viewer with respect to a display surface of a display; acquiring image data comprising an image and disposition information indicating a three-dimensional position of the image with respect to the viewer when the image is displayed to the viewer; calculating a pixel value on the display surface corresponding to a pixel of the image based on the viewpoint and the three-dimensional position; and controlling the display to display the image based on the pixel value.

According to still another embodiment of the invention, a data structure of image data for being reproduced by an image reproducer, the data structure comprises: an image to be displayed; and disposition information indicating a three-dimensional position of the image with respect to a viewer when the image is displayed to the viewer.

DETAILED DESCRIPTION

Various embodiments will be described hereinafter with reference to the accompanying drawings.

An image reproducer, an image reproduction method, and a data structure according to an embodiment are described below in detail with reference to the accompanying drawings. In the embodiment, a typical digital television receiver is exemplified as the image reproducer. The image reproducer may be an apparatus such as a hard disk recorder or a set top box.

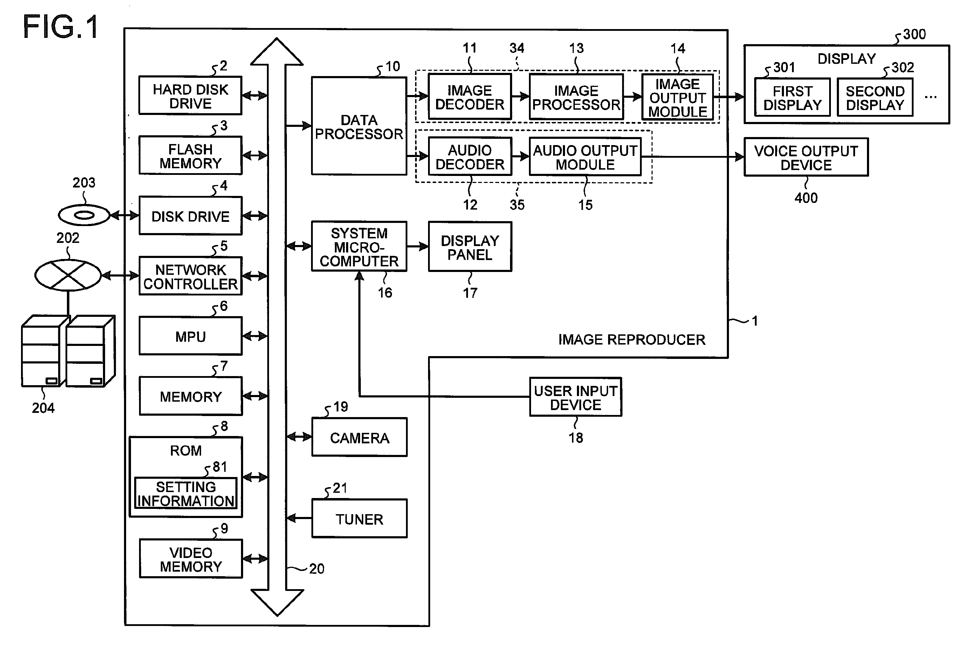

FIG. 1 is a block diagram illustrating an internal structure of an image reproducer 1 according to the embodiment together with a recording medium 203, a network storage 204, a display 300, and a voice output device 400. As illustrated in FIG. 1, the image reproducer 1 is a digital television receiver that reproduces digital data such as an image content and interactive data that are received by a tuner 21. The image reproducer 1 uses the recording medium 203 such as an optical disk and can reproduce the image content and the interactive data by reading out the digital data recorded in the recording medium 203 in a digital format. Examples of the image content (hereinafter referred to as an image) include a still image such as a photograph and a moving image of a predetermined frame rate such as a movie and a television drama.

The image may be an image (a single image or a series of images) continuously displayed on the display 300 and a plurality of images simultaneously displayed on the display 300. In the embodiment, each of the images continuously displayed on the display 300 is displayed on a position, which will be described later. When being displayed, each image is not subjected to image processing such as resizing (reducing) the image to a size capable of being displayed in a display area of the display 300. The details will be described later.

Examples of the image content data including the image (hereinafter referred to as image data) include digital data of joint photographic experts group (JPEG) format and moving picture experts group (MPEG) format. The image reproducer 1 is configured to be connected to the network storage 204 through the Internet 202 to acquire the image data also from the network storage 204 and reproduce images and interactive data.

The image reproducer 1 comprises a hard disk drive 2, a flash memory 3, a disk drive 4, and a network controller 5, all of which are connected to a bus 20. The hard disk drive 2, which records the digital data such as the image data in a magnetic disk rotating at high speed, reads out the digital data from the magnetic disk and writes the digital data into the magnetic disk. The flash memory 3 stores therein the digital data such as the image data. The digital data is written in and read from the flash memory 3. The disk drive 4 has functions to read out the digital data such as the image data from the recording medium 203 and to output a reproduction signal. The network controller 5 controls writing and reading of the digital data such as the image data performed between the image reproducer 1 and the network storage 204 through the Internet 202.

The image reproducer 1 further comprises a micro processing unit (MPU) 6, a memory 7, a read only memory (ROM) 8, and a video memory 9, all of which are connected to the bus 20. The MPU 6 is activated by a boot program read into the memory 7 from the ROM 8. The MPU 6 reads a player program into the memory 7 from the ROM 8, controls system initialization, other programs, and the ending of the system, for example, in accordance with the player program, and operates a system microcomputer 16, which will be described later. The MPU 6 instructs a data processor 10, which will be described later, to reproduce an image and a voice using data received from the tuner 21 and the image data and the interactive data read out from any of the recording medium 203, the network storage 204, the hard disk drive 2, and the flash memory 3. The memory 7 stores therein data and programs used when the MPU 6 operates. The ROM 8 stores therein programs, such as the boot program and the player program, that the MPU 6 executes, and permanent data such as setting information 81 in which various types of setting are written. Decoded (demodulated) image data is sequentially written into the video memory 9.

The image reproducer 1 further comprises the data processor 10, an image processor 34, and an audio processor 35 used for causing the display 300 to reproduce digital data of images as display thereon and the voice output device 400 to reproduce digital data of voice as voice output therefrom. The data processor 10 further comprises the system microcomputer 16 and a display panel 17. The data processor 10 executes a moving image voice reproduction program in accordance with an instruction input by the MPU 6 through the bus 20, separates the digital data received by the tuner 21 and the digital data read out from any of the recording medium 203, the network storage 204, the hard disk drive 2, and the flash memory 3 into the image data and the audio data, and supplies the image data to the image processor 34 and the audio data to the audio processor 35.

The image processor 34 has functions of an image decoder 11, an image processor 13, and an image output module 14 by sequentially executing a program stored therein. The image decoder 11 demodulates (decodes) the image data output from the data processor 10 and outputs the demodulated image data to the image processor 13. The image processor 13 performs image processing on the image data output from the image decoder 11 and produces the image data to be displayed on a first display 301, a second display 302, ... of the display 300. The image output module 14 outputs image output signals (video output signals) corresponding to the image data produced by the image processor 13 to the first display 301, the second display 302, ... of the display 300. As a result, the image output module 14 causes the display 300 to display the images corresponding to the image data produced by the image processor 13. The image processing performed by the image processor 13 and the image output to the display 300 are described later in detail.

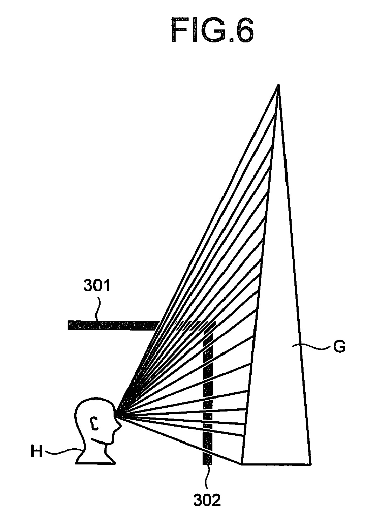

The display 300, which may be a liquid crystal display or a projector, displays images based on the image output signals output from the image output module 14. A display surface on which the display 300 displays an image, i.e., a display surface of the liquid crystal display and a plane on which the projector projects an image, is not limited to be disposed in front of a viewer. The display surface may be disposed above or behind the viewer. Furthermore, a plurality of display surfaces may be disposed in front of and above the viewer. In the embodiment, the first display 301 is disposed above a viewer H while the second display 302 is disposed in front of the viewer H (refer to FIG. 6). The shapes of the first display 301 and the second display 302 of the display 300 are not limited to the planes as exemplarily illustrated in FIG. 6. A curved surface (e.g., a domed shape covering a viewer) may be used. Information relating to the setting of the display 300, such as the positions of the first display 301 and the second display 302 in the display 300, the shape of the display surface, and a pixel disposition, is preliminarily recorded in the setting information 81.

The audio processor 35 has functions of an audio decoder 12 and an audio output module 15 by sequentially executing a program stored therein. The audio decoder 12 demodulates the audio data output from the data processor 10 into demodulated audio data and outputs the demodulated audio data to the audio output module 15. The audio output module 15 outputs an audio output signal corresponding to the demodulated audio data output from the audio output module 15 to the voice output device 400. The voice output device 400, which may be an amplifier and a speaker or the like, outputs a voice based on the audio output signal output from the audio output module 15.

The system microcomputer 16 causes the display panel 17 to display various types of information relating to the reproduction of the images and the interactive data (reproduction information) and inputs an operation input signal input from a user input device 18 (a device through which operation can be input such as a remote controller or an operation button mounted on the image reproducer 1) to the MPU 6 through the bus 20. The display panel 17 has a liquid crystal display panel and displays the reproduction information on the liquid crystal display panel in accordance with an instruction from the system microcomputer 16.

The image reproducer 1 further comprises a camera 19 and the tuner 21, all of which are connected to the bus 20. The camera 19, which is a digital camera, is disposed so as to be toward the front direction of the first display 301 and the second display 302, for example, and images the viewer H (refer to FIG. 6) who views images displayed on the first display 301 and the second display 302 under the control of the MPU 6. The tuner 21 selects a broadcast signal of a desired channel from digital television broadcast signals received by an antenna (not illustrated) under the control of the MPU 6. The tuner 21 outputs the selected and acquired broadcast signal (digital data) to the data processor 10 through the bus 20.

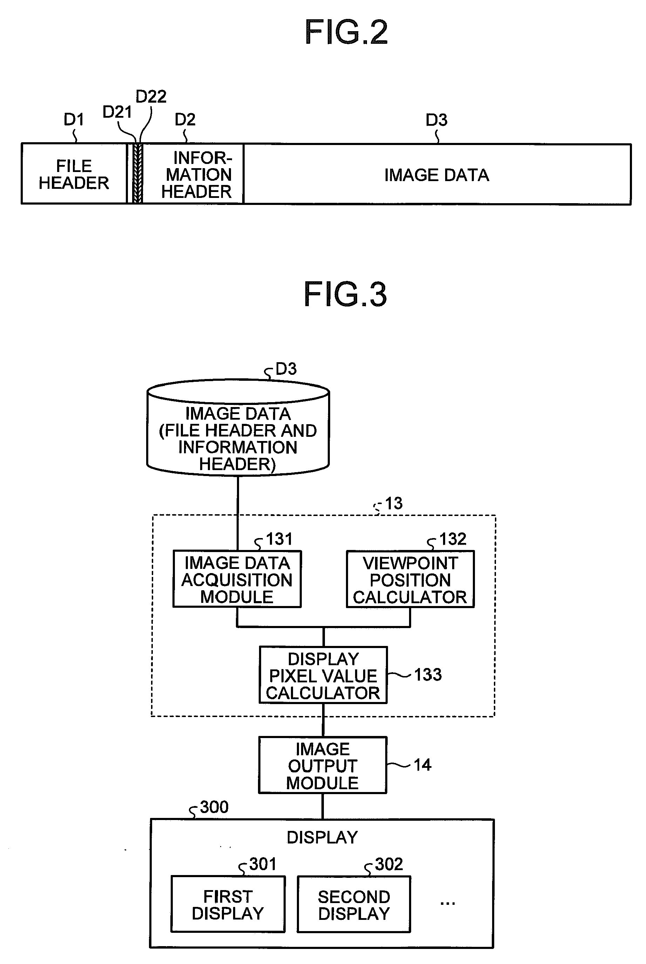

A data structure of the image data displayed on the display 300 by the image reproducer 1 will be described below. FIG. 2 is a schematic diagram illustrating a data structure of image data D3 of the embodiment.

As illustrated in FIG. 2, the image data D3 comprises a file header D1 indicating the head of the data file and an information header D2 storing therein information relating to the image data D3. The image data D3 is bit map data when the image is a still image, for example. The image data D3 is data of still images reproduced at a predetermined frame rate when the image is a moving image, for example. Disposition information D21 and pixel interval information D22 are added to the information header D2 as the information relating to the image data D3. The disposition information D21 indicates the three-dimensional position of the image of the image data D3 with respect to the viewer H when the image is displayed to the viewer H. The pixel interval information D22 indicates an interval between the pixels of the image of the image data D3 when the image is displayed to the viewer H.

Specifically, the disposition information D21 provides parameters that indicate the positions of the images and are tagged with names such as "SURFACEINFO" and "POSINFO". For example, the parameter "SURFACEINFO" includes parameters a, b, c, and k of an equation representing a plane (image plane) on which the image is disposed in a three-dimensional space (e.g., $ax + by + cz = k$). The parameter "POSINFO" includes the coordinates $(x_B, y_B, z_B)$ of a reference point of the image, an x-axis direction unit vector $(x_{ax}, y_{ax}, z_{ax})$ indicating the direction of the image, and a y-axis direction unit vector $(x_{ay}, y_{ay}, z_{ay})$ indicating the direction of the image when the image is disposed on the image plane defined by the parameter "SURFACEINFO", for example. A provider of the image data D3 can designate the plane (image plane), the position of the image on the image plane, and a disposition direction by setting the parameters "SURFACEINFO" and "POSINFO" of the disposition information D21 when setting the image data D3 in a three-dimensional space.

The pixel interval information D22 provides the parameter that indicates an interval between the pixels included in the image and is tagged with a name such as "PIXELGAP". For example, the parameter "PIXELGAP" includes a pixel interval (g) indicating an interval between the pixels using the same unit system as those of the parameters "SURFACEINFO" and "POSINFO". The unit system used for the parameter "PIXELGAP" is not limited to the same unit system as those used for the parameters "SURFACEINFO" and "POSINFO". Any unit system may be employed that enables the parameter to fit with other parameters by predetermined unit conversion processing. A provider of the image data D3 can designate the interval between the pixels included in the image of the image data D3 disposed in a three-dimensional space by setting the parameter "PIXELGAP" of the pixel interval information D22.

A functional structure to display the image data D3 on the display 300 will be described below. FIG. 3 is a block diagram exemplarily illustrating a functional structure of the image reproducer 1 of the embodiment.

As illustrated in FIG. 3, the image processor 13 has functions of an image data acquisition module 131, a viewpoint position calculator 132, and a display pixel value calculator 133. The image data acquisition module 131 acquires the image data D3 output from the image decoder 11, and the file header D1 and the information header D2 added to the image data D3. The image data acquisition module 131 outputs the image data D3, and the disposition information D21 and the pixel interval information D22 that are added to the information header D2 to the display pixel value calculator 133, out of the data output from the image decoder 11. The image data acquisition module 131 outputs the disposition information D21 and the pixel interval information D22 to the display pixel value calculator 133 by extracting the parameters tagged with the predetermined names (such as "SURFACEINFO", "POSINFO", and "PIXELGAP") from the information header D2.

The viewpoint position calculator 132 calculates a viewpoint of the viewer H with respect to the first display 301 or the second display 302 of the display 300 based on the image of the viewer H imaged by the camera 19 and acquires the calculated viewpoint. Specifically, the viewpoint position calculator 132 identifies a face image of a person (the viewer H) in the image imaged by the camera 19 and the position of the face image (positions of eyes) and the size thereof, for example. Thereafter, the viewpoint position calculator 132 calculates a viewpoint (the distance and the coordinates in a three-dimensional space) of the viewer H with respect to the first display 301 or the second display 302. In the embodiment, the viewpoint of the viewer H is calculated based on the image of the viewer H imaged by the camera 19 as an example. The viewpoint of the viewer H may be obtained by detecting the viewer H and a position of the face of the viewer H using an infrared ray sensor or based on numerical values or directions input by operating the remote controller serving as the user input device 18, for example. The viewpoint position calculator 132 outputs the calculated and acquired viewpoint of the viewer H to the display pixel value calculator 133.

The display pixel value calculator 133 calculates a pixel value corresponding to the pixel of the image data D3 on the first display 301 or the second display 302 of the display 300 based on the viewpoint of the viewer H acquired by the viewpoint position calculator 132, and the disposition information D21 and the pixel interval information D22 acquired by the image data acquisition module 131 such that the image data D3 is displayed to the viewer H at the position indicated by the disposition information D21 with the pixel interval indicated by the pixel interval information D22. Specifically, the display pixel value calculator 133 calculates a straight line connecting the pixel of the image of the image data D3 and the acquired viewpoint when the image is disposed at the three-dimensional position indicated by the disposition information D21 with the pixel interval indicated by the pixel interval information D22. Then, the display pixel value calculator 133 calculates a value of the pixel located at the intersection of the calculated straight line and the first display 301 or the second display 302 based on the pixel value of the image data D3 serving as the starting point of the straight line.

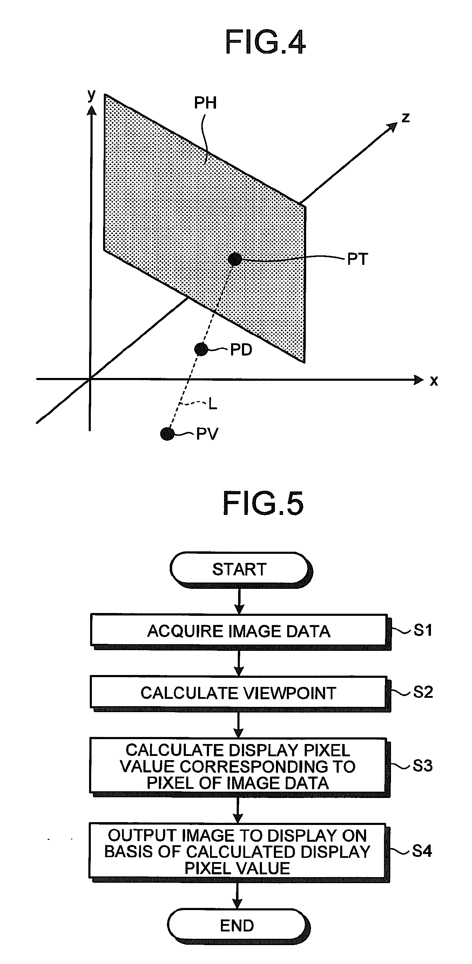

The details of the calculation method of a pixel value performed by the display pixel value calculator 133 will be described below with reference to FIG. 4. FIG. 4 is a conceptual view exemplarily illustrating a state in which a pixel value of a display pixel PD is calculated. In FIG. 4, an image plane PH is a plane indicated by the parameter "SURFACEINFO" of the disposition information D21. A pixel PT is one of the pixels of the image of the image data D3 disposed on the image plane PH in accordance with the parameters "POSINFO" and "PIXELGAP", and has the coordinates $(x_T, y_T, z_T)$. A viewpoint PV is the viewpoint of the viewer H acquired by the display pixel value calculator 133 and has the coordinates $(x_V, y_V, z_V)$. The display pixel PD is the pixel located at the intersection of a straight line L connecting the pixel PT and the viewpoint PV and the first display 301 or the second display 302, and has the coordinates $(x_D, y_D, z_D)$. The coordinates of the display pixel PD are obtained with reference to the information relating to the setting of the display 300, such as the positions of the first display 301 and the second display 302, the shape of the display surface, and the pixel disposition, set in the setting information 81.

The parameters "SURFACEINFO" are a, b, c, and k representing the image plane PH. The parameters "POSINFO" are the coordinates $(x_B, y_B, z_B)$ of the reference point (the right end point of the image), the x-axis direction unit vector $(x_{ax}, y_{ax}, z_{ax})$ and the y-axis direction unit vector $(x_{ay}, y_{ay}, z_{ay})$. The parameter "PIXELGAP" is the pixel interval (g).

When calculating the pixel value, the display pixel value calculator 133 finds the pixel value to be set to the display pixel PD of the first display 301 or the second display 302 when the image plane PH is viewed from the viewpoint PV. The pixel PT is located at the intersection of the image plane PH and the straight line L passing the viewpoint PV and the display pixel PD in a three-dimensional space. The pixel value of the pixel PT is set as the pixel value displayed on the display pixel PD. As a result, an image on the image plane PH when viewed from the viewpoint PV can be displayed on the first display 301 or the second display 302 as the same image as that on the image plane PH. The coordinates of the pixel PT, which is the intersection of the straight line and the plane, are calculated by the following Equations (1) and (2).

$$\begin{cases} x_T = x_V + (x_D - x_V)\, t \\ y_T = y_V + (y_D - y_V)\, t \\ z_T = z_V + (z_D - z_V)\, t \end{cases} \tag{1}$$

$$t = \frac{k - (ax_V + by_V + cz_V)}{a(x_D - x_V) + b(y_D - y_V) + c(z_D - z_V)} \tag{2}$$

When t is indefinite (i.e., a $(x_D - x_V) + b(y_D - y_V) + c(z_D - z_V) = 0$), the straight line L and the image plane PH are in parallel with each other and no intersection is made. In this case, there is no pixel value to be set for the display pixel PD and the case is defined as "NO DATA". When t < 0, the intersection is made on a side opposite the first display 301 or the second display 302 in relation to the viewpoint PV. This case is defined as invalid or "NO DATA". When the pixel defined as invalid in such a case and the pixel value thereof is not obtained by interpolation, which will be described later, the pixel value is set to a preset pixel value such as that of black (color), for example.

The pixel (m, n), which corresponds to the pixel PT, of the image data is obtained by the following Equation (3) using the parameters "POSINFO" and "PIXELGAP".

$$\begin{pmatrix} x_T \\ y_T \\ z_T \end{pmatrix} = \begin{pmatrix} x_B \\ y_B \\ z_B \end{pmatrix} + mg \begin{pmatrix} x_{ax} \\ y_{ax} \\ z_{ax} \end{pmatrix} + ng \begin{pmatrix} x_{ay} \\ y_{ay} \\ z_{ay} \end{pmatrix} \tag{3}$$

The following Equation (4) is obtained by solving the system of equations with respect to m and n.

$$(m,\, n) = \left( \frac{y_{ay}(x_T - x_B) - x_{ay}(y_T - y_B)}{g(x_{ax}y_{ay} - x_{ay}y_{ax})} ,\; \frac{y_{ax}(x_T - x_B) - x_{ax}(y_T - y_B)}{g(x_{ay}y_{ax} - x_{ax}y_{ay})} \right) \tag{4}$$

The pixel value of the pixel of the image data D3 is set to the pixel value of the display pixel PD of the first display 301 or the second display 302 based on the obtained Equation (4). When the pixel of the image data D3 is not accurately designated, e.g., m and n are not integers, the pixel value is set using neighbor pixel values. That is, the pixel values of the pixels of the image data D3 are set to the pixel values of the pixels located at the intersections, each of which is made by the straight line L connecting the pixel PT and the viewpoint PV and the first display 301 or the second display 302 when m and n are integers while the pixel values of the pixels located between the pixels located at the intersections are interpolated by the calculated pixel values of the neighbor pixels. As a result, an image having no missing pixels can be provided to the viewer H.

The pixel values of the pixels on the first display 301 and the second display 302 calculated by the display pixel value calculator 133 are output to the image output module 14 as the image data of the images to be displayed on the first display 301 and the second display 302. The image output module 14 produces image output signals (video output signals) corresponding to the image data output from the display pixel value calculator 133 and outputs them to the first display 301, the second display 302, ... of the display 300. As a result, the viewer H can view the images disposed at the provider's desired three-dimensional positions of the image data D3.

FIG. 5 is a flowchart exemplarily illustrating operation of the image reproducer 1 of the embodiment. As illustrated in FIG. 5, the image data acquisition module 131 acquires the image data D3 output from the image decoder 11, and the file header D1 and the information header D2 added to the image data D3 (S1). The image data acquisition module 131 outputs the acquired image data D3 and the disposition information D21 and the pixel interval information D22 that are added to the information header D2 to the display pixel value calculator 133.

The viewpoint position calculator 132 calculates a viewpoint of the viewer H with respect to the first display 301 or the second display 302 of the display 300 based on the image of the viewer H imaged by the camera 19 and acquires the calculated viewpoint (S2). The viewpoint position calculator 132 outputs the calculated and acquired viewpoint of the viewer H to the display pixel value calculator 133.

The display pixel value calculator 133 then calculates a display pixel value of the display 300 corresponding to the pixel of the image data D3 (the pixel value of the display pixel PD of the first display 301 or the second display 302) based on the viewpoint of the viewer H acquired by the viewpoint position calculator 132, and the disposition information D21 and the pixel interval information D22 acquired by the image data acquisition module 131 (S3). The image output module 14 then produces image output signals (video output signals) based on the display pixel values calculated by the display pixel value calculator 133 and outputs them to the first display 301, the second display 302, ... of the display 300 as image output to the display 300 (S4).

The image reproducer 1 can continuously provide the images (e.g., still images and moving images) disposed at the provider's desired three-dimensional position of the image data D3 to the viewer H by repeating the operation from S1 to S4. At least one of the disposition information D21 and the pixel interval information D22 may include a term that changes as time elapses (function f(t)). When the disposition information D21 or the pixel interval information D22 includes the term that changes as time elapses, the display pixel value calculator 133 calculates the display pixel value corresponding to the pixel of the image data D3 based on the disposition information D21 and the pixel interval information D22 either one of which changes as time elapses by repeating the operation from S1 to S4. As a result, the images moving to the provider's desired positions as time elapses can be provided to the viewer H.

FIG. 6 is a conceptual view exemplarily illustrating how the viewer H views a display image G. As illustrated in FIG. 6, the display image G is provided to the viewer H at the provider's desired position with set pixel interval, i.e., with the provider's desired size. That is, the display image G can be provided to the viewer H with the style that the provider of the display image G intends to provide for the viewer (the position with respect to the viewer in a three-dimensional space and the image size) without being reduced or trimmed against the provider's intention. In addition, the display can follow the change of the viewpoint of the viewer H, thereby enabling the display image G to be provided as a realistic and expressive image.

In the embodiment, the image plane (represented by the parameter "SURFACEINFO") when the image is disposed in a three-dimensional space is exemplified as a plane. The image plane may be a curved surface when the image is disposed in a three-dimensional space . In this case, parameters representing the curved surface are set in the parameter "SURFACEINFO". The technical essence is the same as that when the image plane is the plane. The coordinates of the image plane PH, the pixel PT, the display pixel PD, and the viewpoint PV can be determined using any of the viewpoint PV, the display pixel PD, and the image plane PH as the reference. For example, the pixel value may be calculated by converting relative coordinates with respect to the viewpoint PV into absolute coordinates, or based on an idea that the display pixel PD and the pixel PT are translated in an absolute coordinate system whose origin is the viewpoint PV. In this case, the display of the image can follow the movement of the viewpoint PV as the parallel translation corresponding to the movement of the viewpoint PV. The programs executed by the image reproducer 1 of the embodiment are provided by being preliminarily stored in the ROM, for example. The programs executed by the image reproducer 1 of the embodiment may be recorded into a storage medium readable by a computer in a format installable in or a file executable by the computer, and provided. The examples of the storage medium include a compact disk ROM (CD-ROM), a flexible disk (FD), a CD-recordable (CD-R), and a digital versatile disk (DVD).

The programs executed by the image reproducer 1 of the embodiment may be stored in a computer coupled to a network such as the Internet, and be provided by being downloaded through the network. The programs executed by the image reproducer 1 of the embodiment may be provided or delivered through a network such as the Internet.

The programs executed by the image reproducer 1 of the embodiment have a module structure comprising the above-described components (the image data acquisition module 131, the viewpoint position calculator 132, the display pixel value calculator 133, and the image output module 14). In actual hardware, the CPU (processor) reads the programs from the ROM and executes the programs. Once the programs are executed, the above-described components are loaded into a main storage, so that the components are formed in the main storage.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. An image reproducer comprising:

   a viewpoint position acquisition module (132) configured to acquire a viewpoint of a viewer (H) with respect to a display surface (301, 302) of a display (300);
   an image data acquisition module (131) configured to acquire image data (D3) comprising an image and disposition information (D21) indicating a three-dimensional position of the image with respect to the viewer when the image is displayed to the viewer;
   a pixel value calculator (133) configured to calculate a pixel value on the display surface corresponding to a pixel of the image based on the viewpoint and the three-dimensional position; and
   a display controller (14) configured to control the display (300) to display the image based on the pixel value.

2. The image reproducer of Claim 1, wherein
   the image data (D3) further comprises pixel interval information (D22) indicating an interval between pixels of the image when the image is disposed at the three-dimensional position,
   the image data acquisition module (131) is configured to acquire the pixel interval information, and
   the pixel value calculator (133) is configured to calculate the pixel value on the display surface corresponding to the pixel of the image disposed at the interval.

3. The image reproducer of Claim 2, wherein
   at least one of the three-dimensional position and the interval is configured to change over time, and
   the pixel value calculator (133) is configured to calculate the pixel value on the display surface based on the three-dimensional position or the interval changing over time.

4. The image reproducer of any one of Claims 1 to 3, wherein the pixel value calculator (133) is configured to calculate the pixel value of a pixel at an intersection of the display surface and a straight line connecting a pixel of the image and the viewpoint.

5. The image reproducer of Claim 4, wherein the pixel value calculator (133) is configured to calculate the pixel value of a pixel between a plurality of pixels at the intersection of the display surface and the straight line connecting the pixel of the image and the viewpoint by interpolating the pixel value of a first pixel near the pixel between the plurality of pixels.

6. The image reproducer of Claim 4 or 5, wherein the pixel value calculator (133) is configured to set pixel values of a plurality of pixels at the intersection of the display surface and the straight line connecting the pixel of the image and the viewpoint, and to set the pixel value of a second pixel other than a pixel between the plurality of pixels at the intersection to a preset pixel value.

7. The image reproducer of any one of Claims 1 to 6, wherein the image is one of a plurality of images continuously displayed on the display (300).

8. The image reproducer of any one of Claims 1 to 7, wherein the image is a still image or a moving image of a first frame rate.

9. An image reproduction method comprising:

   acquiring a viewpoint of a viewer with respect to a display surface of a display;
   acquiring image data comprising an image and disposition information indicating a three-dimensional position of the image with respect to the viewer when the image is displayed to the viewer;
   calculating a pixel value on the display surface corresponding to a pixel of the image based on the viewpoint and the three-dimensional position; and
   controlling the display to display the image based on the pixel value.

10. A data structure of image data (D3) for being reproduced by an image reproducer, the data structure comprising:

    an image to be displayed; and
    disposition information (D21) indicating a three-dimensional position of the image with respect to a viewer when the image is displayed to the viewer.

# FIG.1

EP 2 600 625 A1

# FIG.2

D22

D1  D21  D2  D3

| FILE HEADER | | INFOR- MATION HEADER | IMAGE DATA |

# FIG.3

D3

IMAGE DATA
(FILE HEADER AND INFORMATION HEADER)

13

131

IMAGE DATA ACQUISITION MODULE

132

VIEWPOINT POSITION CALCULATOR

DISPLAY PIXEL VALUE CALCULATOR — 133

IMAGE OUTPUT MODULE — 14

300

DISPLAY

301

FIRST DISPLAY

302

SECOND DISPLAY

...

# FIG.4

# FIG.5

START

ACQUIRE IMAGE DATA — S1

CALCULATE VIEWPOINT — S2

CALCULATE DISPLAY PIXEL
VALUE CORRESPONDING TO
PIXEL OF IMAGE DATA — S3

OUTPUT IMAGE TO DISPLAY ON
BASIS OF CALCULATED DISPLAY
PIXEL VALUE — S4

END

# FIG.6

Europäisches
Patentamt

European
Patent Office

Office européen
des brevets

# EUROPEAN SEARCH REPORT

Application Number

EP 12 17 9970

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 2 408 215 A2 (LG ELECTRONICS INC [KR]) 18 January 2012 (2012-01-18) * paragraph [0056] - paragraph [0165] * | 1-4,7-9 | INV. H04N13/04 H04N13/00 |
| X | US 2010/182409 A1 (SUZUKI KAZUYOSHI [JP]) 22 July 2010 (2010-07-22) * paragraph [0040] - paragraph [0093] * | 1-4,7-10 | |
| Y | | 5,6 | |
| X | US 2004/233275 A1 (TOMITA SEIJIRO [JP]) 25 November 2004 (2004-11-25) * paragraph [0085] - paragraph [0151] * | 1-4,7-10 | |
| Y | WO 2011/033423 A1 (KONINKL PHILIPS ELECTRONICS NV [NL]; BRULS WILHELMUS HENDRIKUS ALFONSU) 24 March 2011 (2011-03-24) | 5,6 | |
| A | * page 10, line 3 - page 34, line 34 * | 1-4,7-9 | |
| A | WO 2010/087575 A2 (LG ELECTRONICS INC [KR]; SUH JONG YEUL [KR]; YANG JEONG HYU [KR]) 5 August 2010 (2010-08-05) * paragraph [0029] - paragraph [0187] * | 1-3,7-10 | TECHNICAL FIELDS SEARCHED (IPC) H04N |
| A | US 2010/039504 A1 (TAKAHASHI SHUICHI [JP] ET AL) 18 February 2010 (2010-02-18) * paragraph [0058] - paragraph [0186] * | 1,2,7-9 | |
| A,D | US 2005/078053 A1 (KONDO TETSUJIRO [JP] ET AL) 14 April 2005 (2005-04-14) * the whole document * | 1-10 | |

The present search report has been drawn up for all claims

| Place of search | Date of completion of the search | Examiner |
|---|---|---|
| Munich | 31 January 2013 | Gil Zamorano, Gunnar |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 17 9970

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2013

| Patent document cited in search report | | Publication date | Patent family member(s) | | Publication date |
|---|---|---|---|---|---|
| EP 2408215 | A2 | 18-01-2012 | CN | 102447861 A | 09-05-2012 |
| | | | EP | 2408215 A2 | 18-01-2012 |
| | | | KR | 20120006742 A | 19-01-2012 |
| | | | US | 2012013612 A1 | 19-01-2012 |
| US 2010182409 | A1 | 22-07-2010 | CN | 101783967 A | 21-07-2010 |
| | | | JP | 4793451 B2 | 12-10-2011 |
| | | | JP | 2010171646 A | 05-08-2010 |
| | | | US | 2010182409 A1 | 22-07-2010 |
| US 2004233275 | A1 | 25-11-2004 | AU | 2003221143 A1 | 11-10-2004 |
| | | | US | 2004233275 A1 | 25-11-2004 |
| | | | WO | 2004084560 A1 | 30-09-2004 |
| WO 2011033423 | A1 | 24-03-2011 | CN | 102484738 A | 30-05-2012 |
| | | | EP | 2478706 A1 | 25-07-2012 |
| | | | KR | 20120079101 A | 11-07-2012 |
| | | | TW | 201125353 A | 16-07-2011 |
| | | | US | 2012206453 A1 | 16-08-2012 |
| | | | WO | 2011033423 A1 | 24-03-2011 |
| WO 2010087575 | A2 | 05-08-2010 | CA | 2749583 A1 | 05-08-2010 |
| | | | CN | 102388620 A | 21-03-2012 |
| | | | EP | 2384585 A2 | 09-11-2011 |
| | | | KR | 20110126101 A | 22-11-2011 |
| | | | US | 2011273530 A1 | 10-11-2011 |
| | | | WO | 2010087575 A2 | 05-08-2010 |
| US 2010039504 | A1 | 18-02-2010 | CN | 101651842 A | 17-02-2010 |
| | | | JP | 2010045584 A | 25-02-2010 |
| | | | US | 2010039504 A1 | 18-02-2010 |
| | | | US | 2012327200 A1 | 27-12-2012 |
| US 2005078053 | A1 | 14-04-2005 | JP | 4406824 B2 | 03-02-2010 |
| | | | JP | 2005070963 A | 17-03-2005 |
| | | | US | 2005078053 A1 | 14-04-2005 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005070963 A